(19) Europäisches Patentamt
European Patent Office
Office européen des brevets

(11) **EP 1 813 446 B1**

(12) **EUROPEAN PATENT SPECIFICATION**

(45) Date of publication and mention of the grant of the patent:
**18.07.2012 Bulletin 2012/29**

(21) Application number: **05806251.4**

(22) Date of filing: **08.11.2005**

(51) Int Cl.:
***B60C 11/11*** *(2006.01)* ***B60C 11/12*** *(2006.01)*

(86) International application number:
**PCT/JP2005/020447**

(87) International publication number:
**WO 2006/049298 (11.05.2006 Gazette 2006/19)**

(54) **PNEUMATIC TIRE**

LUFTREIFEN

PNEUMATIQUE

(84) Designated Contracting States:
**BE FI FR SE**

(30) Priority: **08.11.2004 JP 2004323900**

(43) Date of publication of application:
**01.08.2007 Bulletin 2007/31**

(73) Proprietor: **Bridgestone Corporation**
**Tokyo 104-8340 (JP)**

(72) Inventor: **SUGANUMA, Akira**
**c/o BRIDGESTONE CORPORATION**
**Tokyo 1048340 (JP)**

(74) Representative: **Oxley, Robin John George et al**
**Marks & Clerk LLP**
**90 Long Acre**
**London**
**WC2E 9RA (GB)**

(56) References cited:
**EP-A- 1 555 142**
**JP-A- 7 290 908**
**JP-A- 10 024 709**
**JP-A- 11 208 220**
**JP-A- 2001 063 322**
**JP-A- 2001 294 023**
**JP-A- 2003 182 313**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 813 446 B1

## Description

*Technical Field*

The present invention relates to a pneumatic tire in which sipes are formed in multiple tread blocks. More specifically, the invention especially relates to a pneumatic tire that excels in both traction performance and braking performance on icy and snowy road surfaces.

*Technical Background*

Due to the cessation of production and selling of spiked tires, winter tires (hereafter, "STL") that exhibit excellent performance on ice and snow have been developed to replace spiked tires (e.g., see Japanese Patent Application Laid-open No. 7-237408).

During the initial phases of STL development, the objective was to shorten the braking distance until it was equal to that of a spiked tire. In order to improve the braking performance on icy and snowy road surfaces, it is effective to elongate the edge length in the widthwise direction of the blocks that form the tread part, and to increase block rigidity and suppress block deformation. Accordingly, as a design for improving performance on ice and snow, development has proceeded with the central aim of maintaining or improving block rigidity while elongating edge length.

However, in order to increase edge length, when blocks are simply made smaller or the number of sipes increased, block rigidity is affected and block deformation increases so for this reason, braking performance does not improve. On the other hand, when the deformation of the blocks overall is suppressed in order to improve braking performance on ice and snow, so-called traction slippage occurs when starting off and accelerating and this affects traction performance (i.e., starting acceleration performance). For this reason, there has been a problem in that traction performance and braking performance on icy and snowy road surfaces cannot both be improved.

As a solution to this, in order to improve edge length while maintaining block rigidity, proposals have been made, i.e. in Japanese Patent Application Laid-open No. 7-237408, such as setting platforms in the lug grooves and forming sipes that open to one side. Nonetheless, these have not amounted to solutions to the problem.
JP10024709, JP2001294023 and JP0729098 disclose known pneumatic tires.

*Disclosure of the Invention*

*Subjects to be Addressed by the Invention*

In light of the above-described circumstances, the present invention seeks to provide a pneumatic tire that improves both traction performance and braking performance on icy and snowy road surfaces.

*Means for Addressing the Subjects*

The invention of a first aspect is a pneumatic tire as claimed in claim 1.

The ground contact area is the area that includes not only the blocks but also the grooves. Normal inner pressure is the air pressure (maximum air pressure) that corresponds to the maximum load capability in the applicable size ply-rating of the *JATMA Year Book* (the loads in bold print in the inner pressure-load capacity chart).

The total area of the sipes is the total sum of the areas of the sipe surfaces, and when the sipe surfaces are not flat, the total area is the total sum of the area in a state where the sipe surfaces have been extended flat.

Note that when the outer peripheral length of a block whose groove depth is Dn is defined as Ln, the above Sa becomes a value calculated as $Sa = \Sigma (Ln \times Dn)$.

When the tire inner pressure is made the normal pressure and the maximum load is applied, when the area S of the tread of the block is smaller than 1.60% of the ground contact area, block deformation increases and ground contact capability decreases, and this is not preferable because traction performance and braking performance on ice and snow also deteriorate. When the area S is larger than 2.20% of the above-mentioned ground contact area, block deformation decreases and this is not preferable since loss of traction on ice and snow is more likely to occur.

When the outer peripheral length L of the block is shorter than 39.0% of the tire center line length in the ground contact surface, block deformation increases and ground contact capability deteriorates so this is not preferable because the traction performance and braking performance on ice and snow also deteriorate. When the outer peripheral length L of the block is greater than 53.0% of the tire center line length in the ground contact surface, block deformation decreases so this is not preferable because loss of traction on ice and snow is more likely to occur.

When the deepest depth Ds of the sipes is less than 50% of the depth D of the main grooves in the peripheral direction, block deformation decreases and this is not preferable because loss of traction on ice and snow becomes more likely to occur. Also, when this deepest depth Ds is greater than 90% of the above-described depth D, block deformation increases and ground contact capability deteriorates, and this is not preferable because traction performance and braking performance on ice and snow also deteriorate.

The above-described total sum Gt is an index showing the amount of deformation of all of the blocks, and the above-described total sum Gu is an index showing the amount of deformation on the upper portion of the blocks, i.e., at the vicinity of the tread. By making the total sum Gt 1.05 or less and the total sum of the Gu 1.60 or less, the movement of all of the blocks becomes pliant when traction is added, i.e., when accelerating during start-off. This causes the tire to be improved in following the road surface and it becomes advantageous to suppress loss of traction. If the total sum Gt is made greater than 1.05 and the total sum Gu greater than 1.60, loss of traction is more likely to occur.

Also, by setting the total sum Gt to 0.95 or more and the total sum Gu to 1.30 or more, ground contact capability improves as does braking performance. If the total sum Gt is made less than 0.95 and the total sum Gu made less than 1.30, it is likely that the braking performance will deteriorate.

Accordingly, with the invention of the first aspect, a pneumatic tire can be made to have both improved braking performance and starting acceleration.

The invention of a second aspect is that it fulfills 1.30 ≤ Total Sum Gu ≤ 1.45.

Due to this, the effects that are obtainable with the present invention of the first aspect are achieved more certainly.

*Effects of the Invention*

With the present invention, a pneumatic tire can be realized that excels in both traction performance and braking performance on icy and snowy road surfaces.

*Brief Explanation of the Drawings*

FIG. 1 is a cross-sectional drawing in the diameter direction of a pneumatic tire according to a first embodiment;
FIG 2 is a flat drawing showing the configuration of the tread part of the pneumatic tire according to the first embodiment;
FIG 3 is a flat drawing showing the configuration of the tread part of the pneumatic tire according to a second embodiment; and
FIG 4 is a graph showing the relation between the Gu and Gt of each of the pneumatic tires used in the experiments.

*Best Modes for Practicing the Invention*

Hereafter, exemplary embodiments of the present invention will be raised and explanations given thereon. Note that from the second embodiment on, structural elements that are the same as those already explained are given the same number and explanations thereon will be omitted.

[First Exemplary Embodiment]

Initially, the first exemplary embodiment will be explained. As shown in FIG 1, a pneumatic tire 10 according to the present embodiment is a winter tire, which includes cords that in practically extend in the radial directions, and the tire is provided with a carcass 12 whose edge portions on both sides are respectively folded back at bead cores 11. The carcass 12 is comprised of one layer or multiple layers.

A belt layer 14 on which multiple layers of tire plies (e.g., two) are overlapped is provided buried in the outer side in the diameter direction of the tire at the crown portion of the carcass 12. The cords that form each tire ply are provided in an embedded manner so as to intersect with each other in the peripheral direction of the tire and to face the directions that intersect with each other.

A tread part 16 in which grooves are arranged is formed at the outer side of the belt layer 14 in the diameter direction of the tire.

As shown in FIG 2, center main grooves 20L, 20R that extend in the peripheral direction of the tire are formed symmetrically relative to the tire equatorial plane CL in the central region of the tread part 16. Shoulder main grooves 22L, 22R that extend in the peripheral direction of the tire are respectively formed at the outer sides of the center main grooves 20L, 20R in the widthwise direction of the tire. In this manner, four main grooves are formed in the tread part 16 along the peripheral direction of the tire. Note that in the present embodiment, the depths of these four main grooves are the same.

Also, a multitude of lug grooves 24 are formed in the tread part 16. Both end portions of the lug grooves 24 each opens to two of the four of these main grooves, or extend over the tread ends T so as to be able to discharge water towards the outer sides in the widthwise direction of the tire.

Here, reference to the tread ends indicates the outermost grounded portions in the widthwise direction of the tire, when a pneumatic tire is attached to a standard rim as regulated by the JATMA Year Book (Japan Automobile Tire Manufacturers Association, 2004 edition), the inner pressure of the tire is made 100% of the air pressure (i.e., greatest air pressure) corresponding to the maximum load capability in the applicable size ply-rating of the *JATMA Year Book* (the loads in bold print in the pressure-load capability chart) and the maximum load is applied to the tire. Note that when TRA standards or ETRTO standards are applied at the place of use or production site, the tread ends are defined according to each of these standards.

Due to the tire configuration noted above, a multitude of blocks 26 that are partitioned by the main grooves and the lug grooves are formed in the tread part 16. Due to these multitudinous blocks 26, a center block row 32 positioned on the tire center line CL (i.e., on the equatorial plane of the tire); second block rows 34L, 34R that are adjacent to the center block row 32 at the outer sides in the widthwise direction of the tire; and third block rows 36L, 36R that are respectively provided at the outer sides of the second block rows 34L, 34R in the widthwise direction of the tire, are formed in the tread part 16.

With the present exemplary embodiment, the configuration is made so that the position of each lug groove 24 in the peripheral direction of the tire in each block row is staggered, and lug groves in the same position in the widthwise direction of the tire are not formed for each block row.

Four sipes 30 are formed in each block 26 along the lug grooves 24. The sipes 30 are all closed sipes whose ends both do not open out from the block walls. All of the sipes 30 extend in zigzag form, and the sipe surfaces of the sipes 30 extend in zigzag form where the directions of inclination alternately link to different surfaces.

Also, the sipes 30 are arranged so as to divide the block 26 into equal intervals in the peripheral direction of the block. Due to this, the ground contact pressure becomes uniform. Accordingly, localized wear that occurs due to uneven distribution of ground contact pressure can be prevented.

With the present exemplary embodiment, blocks 26 of the same shape are arrayed in the center block row 32 and the second block rows 34.

The area S for each tread of the blocks 26 is made within the range of 1.60 - 2.20% of the ground contact area, when the inner pressure of the tire is made to be the regular inner pressure and the tire is bearing the maximum load.

The outer peripheral length L for each block 26 is made to be within the range of 39.0 - 53.0% of the tire center line length X within the ground contact surface K.

The greatest depth Ds of the sipes 30 is made to be within the range of 50 - 90% of the depth D of the center main grooves 20L, 20R and the shoulder main grooves 22L, 22R.

With the present embodiment, the area of the outer wall of the block 26 is Sa and the total area of the sipe that the block 26 has is Sb, and is calculated for each block:

$$Gt = S/ (Sa + Sb \times 0.6)$$

$$Gu = S/ (Ds \times L + Sb \times 0.6)$$

Furthermore, the row averages Gt are calculated that are the average value of the Gt in each block row and the row averages Gu are calculated that are the average value of the Gu in each block row. Then, the total sum is calculated from the row averages Gt of the block rows of the three rows formed from the blocks 26 partitioned by, among the block rows that are formed in the tread part 16, the four main grooves and the lug grooves 24 that intersect the adjacent main grooves. That is, the total sum Gt is calculated where the row average Gt of one center block row 32 and each row average Gt of the two second block rows 34L, 34R are added. Similarly, the total sum Gu is calculated where the row average Gu of one center block row 32 and each row average Gu of two second block rows 34L, 34R are added. In this manner, the calculated total sum Gt and total sum Gu fulfill the following:

$$0.95 \leq \text{Total Sum Gt} \leq 1.05$$

$$1.30 \leq \text{Total Sum Gu} \leq 1.60$$

Note that with the present exemplary embodiment, with each block row the shapes of the blocks are the same so the row average Gt is the same value for the Gt for each of the blocks 26, and the same applies to the Gu.

As explained above, with the present exemplary embodiment, the area S of the tread of the blocks 26 are all made to be within the range of 1.60 - 2.20% of the ground contact area when the inner pressure of the tire is made to be the regular inner pressure and the tire is bearing the maximum load. Also, the outer peripheral length L for each block 26 is made to be within the range of 39.0 - 53.0% of the tire center line length X within the ground contact surface. Further, the greatest depth Ds of the sipes 30 is made to be within the range of 50 - 90% of the depth D of the center main grooves 20L, 20R and the shoulder main grooves 22L, 22R. The total sum Gt is 1.05 or less and the total sum Gu is 1.60 or less, so when traction is generated (i.e., when speeding up during starting acceleration and the like), the movement of all the blocks becomes pliant. This causes the tire to be improved in following the road surface and it is advantageous to suppress traction loss. Also, the total sum Gt is set at 0.95 or more and the total sum Gu is 1.30 or more so tire contact with the ground improves and braking performance is enhanced. A pneumatic tire 10 can thus be realized where both the braking performance and acceleration speed performance are improved.

[Second Exemplary Embodiment]

Next, the second exemplary embodiment will be explained. As shown in FIG 3, in comparison with the first exemplary embodiment, the present exemplary embodiment has blocks 46 provided in the tread part 44 in place of the blocks 26. In comparison with the blocks 26, the number of sipes and the shapes of the blocks 46 differ.

Three sipes 50 are formed in the blocks 46. Of these sipes 50, there are two sipes 50C that are closed sipes positioned at both ends in the peripheral direction of the tire. A single sipe 50M, which is an open sipe, is positioned between the closed sipes, and both ends open at block wall surfaces 46W.

All of the sipes 50C, 50M extend in zigzag form in which the sipe surfaces of the sipes 50C, 50M extend in zigzag forms while connecting the surfaces where the inclined directions differ alternately.

With the present exemplary embodiment, the two sipes 50C of the sipes 50 at both outer sides in the peripheral direction of the tire are closed sipes, and the single sipe 50M positioned between these closed sipes is an open sipe, so compared to the first exemplary embodiment, the performance on ice and snow can be made to greatly improve due to the increase in edging effect.

<Experimental Example>

The present inventors first conducted a performance test using a conventional pneumatic tire (11R22.5). This conventional pneumatic tire has main grooves and lug grooves in the tread part of the same number, shape, and position as the pneumatic tire in the first exemplary embodiment, and the forms of the sipes are different from those of the pneumatic tire of the first exemplary embodiment. The tread conditions of the pneumatic tire of this conventional example are shown in Chart 1.

| | TOTAL SUM | | CENTER BLOCK ROW (CL BLOCK ROW) | | | | | | | | | SECOND BLOCK ROW (2ND BLOCK ROW) | | | | | | | | |
|---|---|---|---|---|---|---|---|---|---|---|---|---|---|---|---|---|---|---|---|---|
| | TOTAL SUM OF Gt | TOTAL SUM OF Gu | ROW AVERAGE Gt | ROW AVERAGE Gu | D | Ds | S | L | RAISED AREA | BLOCK OUTER WALL AREA (Sa) | SIPE AREA (Sb) | ROW AVERAGE Gt | ROW AVERAGE Gu | D | Ds | S | L | RAISED AREA | BLOCK OUTER WALL AREA (Sa) | SIPE AREA (Sb) |
| EMBODIMENT 1 | 0.98 | 1.33 | 0.33 | 0.45 | 20 | 12 | 1021.2 | 129.5 | 208.8 | 2380.3 | 1210.6 | 0.33 | 0.44 | 20 | 12 | 1003.93 | 128.412 | 208.8 | 2359.5 | 1210.6 |
| EMBODIMENT 2 | 1.03 | 1.43 | 0.35 | 0.48 | 20 | 12 | 1021.2 | 129.5 | 208.8 | 2380.3 | 953.6 | 0.34 | 0.48 | 20 | 12 | 1003.93 | 128.412 | 208.8 | 2339.5 | 947.5 |
| EMBODIMENT 3 | 0.97 | 1.32 | 0.31 | 0.44 | 20.4 | 12 | 852.1 | 125.2 | 240.0 | 2314.5 | 713.7 | 0.33 | 0.44 | 20 | 12 | 1093 | 145.972 | 320.0 | 2599.4 | 1205.0 |
| EMBODIMENT 4 | 1.00 | 1.30 | 0.33 | 0.38 | 20 | 15.5 | 1064.7 | 131.9 | 192.6 | 2444.5 | 1224.9 | 0.33 | 0.46 | 20 | 12 | 1064.7 | 131.853 | 192.6 | 2444.5 | 1224.9 |
| CONVENTIONAL EX | 1.13 | 1.66 | 0.37 | 0.57 | 20 | 11 | 992.6 | 129.6 | 224.0 | 2369.0 | 532.9 | 0.38 | 0.55 | 20 | 12 | 1000.27 | 127.013 | 224.0 | 2316.3 | 515.5 |

Chart 1

Note that in Chart 1, the units of measurement for D, Ds, S, and L are mm, and the units of measurement for the raised area, Sa (area of block outer wall), and Sb (sipe area) are $mm^2$. Also, the raised area refers to portions of the block outer wall area that are provided at shallower region differ from portions of the block outer wall area provided at the deepest groove.

With regard to the test requirements, the rim size was 22.5 x 7.50, the air pressure was 900kPa, and the load was a normal load.

Then, as (1) braking test on ice, the rate of deceleration was obtained by applying the brakes on an icy road surface and an index of 100 was used as the standard value. (2) Also, as a traction test on ice, the rate of acceleration was obtained by accelerating on an icy road surface and an index of 100 was used as the standard value. These are shown in Chart 2.

Chart 2

| | TOTAL SUM OF Gt | TOTAL SUM OF Gu | BRAKING TEST ON ICE | TRACTION TEST ON ICE |
|---|---|---|---|---|
| | | | RATE OF DECELERATION INDEX | RATE OF ACCELERATION INDEX |
| EMBODIMENT 1 | 0.98 | 1.33 | 105 | 120 |
| COMPARATIVE EXAMPLE 1 | 1.09 | 1.44 | 120 | 90 |
| COMPARATIVE EXAMPLE 2 | 0.91 | 1.27 | 95 | 100 |
| CONVENTIONAL EX. | 1.13 | 1.66 | 100 | 100 |

Also, the present inventors produced a pneumatic tire in accordance with the first exemplary embodiment for an Example 1 tire. Measurement of the diameter and width and the like of this Example 1 pneumatic tire are the same as the pneumatic tire of the above-described conventional example. The tread requirements of the Example 1 pneumatic tire are also shown in Chart 1.

A performance test identical to that for the pneumatic tire of the conventional example was performed using this Example 1 pneumatic tire, and with regard to two of the above test items, indexes that are a relative evaluation with the conventional pneumatic tire were calculated. The calculated indexes are shown together in Chart 2. In Chart 2, the larger the index, the better the performance.

As is understood from Chart 2, with regard to the pneumatic tire of Example 1, the evaluation results were more favorable than the pneumatic tire of the conventional example in all areas.

Further, the present inventors used a pneumatic tire according to the second exemplary embodiment as an Example 2 pneumatic tire, and similarly carried out a performance test. The tread requirements of the pneumatic tire of this second embodiment are also shown in Chart 1. Also, the present inventors used an Example 3 pneumatic tire and an Example 4 pneumatic tire as pneumatic tires according to the present invention, and similarly conducted performance tests. The tread requirements of the pneumatic tires of Examples 3 and 4 are also shown in Chart 1.

With the pneumatic tires of Examples 2 - 4, the evaluation results became more favorable than the pneumatic tire of the conventional example in all areas.

Also, the present inventors produced a pneumatic tire of Comparative Example 1 and a pneumatic tire of Comparative Example 2. The total sum of Gt and total sum of Gu for the pneumatic tires of Comparative Examples 1 and 2 are shown together in Chart 2. Then, the pneumatic tires of these Comparative Examples 1 and 2 were used and a performance test similar to that for the pneumatic tire of the conventional example was performed. With regard to the above-described two test items, indexes that are relative evaluations with the conventional pneumatic tire were calculated. The calculated indexes are shown together in Chart 2.

As is understood from Chart 2, with the pneumatic tire of Comparative Example 1, the index for the rate of deceleration is greatly higher than the pneumatic tire of the conventional example, however, the index for the rate of acceleration is lower than the pneumatic tire of the conventional example and the traction performance on ice worsened. Further, with the pneumatic tire of Comparative Example 2, the index for the rate of acceleration is the same as the pneumatic tire of the conventional example, and the index for the rate of deceleration is lower than the pneumatic tire of the conventional example, and the braking performance on ice worsened.

Further, the relations between the Gu and Gt for the pneumatic tires of Examples 1 - 4, the pneumatic tires of Comparative Examples 1 and 2, and the pneumatic tire of the conventional example are all shown in FIG 4. It is determined from FIG 4 and Chart 2 that when the total sum of Gu is within the range of 1.30 - 1.60, and also the total sum of Gt is within the range of 0.95 - 1.05, the index for the rate of deceleration and the index for the rate of acceleration become better than the pneumatic tire of the conventional example.

As described above, modes for practicing the invention explained according to exemplary embodiments, however, these exemplary embodiments are examples. Various changes can be made and practiced within the scope without deviating from the scope o the present invention. It is also a given that the scope of rights of the present invention are not limited by the above-described embodiments.

*Possible Industrial Uses*

The present invention can be used as a pneumatic tire that excels in both traction performance and braking performance on icy and snowy road surfaces.

## Claims

1. A pneumatic tire (10) with a tread part (16) comprising three rows of block rows (32, 34L, 34R, 36L, 36R) formed from blocks (26, 46), the blocks being partitioned by four main grooves (20L, 20R, 22L, 22R) in the tire peripheral direction and lateral grooves (24) that intersect with the adjacent main grooves, wherein
the blocks each have at least one sipe (30, 50);
an area (S) of a tread of each block is within the range of 1.60 - 2.20% of the ground contact area (K) that is formed when the inner pressure of the tire is the normal inner pressure and the maximum load is applied to the tire;
an outer peripheral length (L) of each block is within the range of 39.0 - 53.0% of the tire center line length (X) in the ground contact surface (K);
a deepest depth (Ds) of the sipes is within the range of 50 - 90% of the depth (D) of the main grooves in the peripheral direction;
and when Sa indicates an area of the outer peripheral wall of the block and Sb indicates a total area of the sipes provided in each block, the following values are calculated for each block:

$$Gt = S/ (Sa + Sb \times 0.6)$$

$$Gu = S/ (Ds \times L + Sb \times 0.6)$$

and row averages of Gt are calculated that are the average value of the Gt value for each block row and row averages of Gu are calculated that are the average value of the Gu value for each block row;
and a total sum Gt, that is the total sum of the row averages of Gt, is calculated and a total sum Gu, that is the total sum of the row averages of Gu, is calculated; then
the following are fulfilled

$$0.95 \leq \text{Total Sum Gt} \leq 1.05$$

$$1.30 \leq \text{Total Sum Gu} \leq 1.60 .$$

2. The pneumatic tire of claim 1, wherein the following is fulfilled:

$$1.30 \leq \text{Total Sum Gu} \leq 1.45$$

## Patentansprüche

1. Luftreifen (10) mit einem Laufflächenteil (16), der drei Reihen von Blockreihen (32, 34L, 34R, 36L, 36R) umfasst, die aus Blöcken (26, 46) geformt sind, wobei die Blöcke durch vier Hauptrillen (20L, 20R, 22L, 22R) in der Reifenumfangsrichtung und seitliche Rillen (24), die sich mit den benachbarten Hauptrillen überschneiden, unterteilt werden, wobei
die Blöcke jeder wenigstens eine Lamelle (30, 50) haben,
eine Fläche (S) einer Lauffläche jedes Blocks innerhalb des Bereichs von 1,60 bis 2, 20 % der Bodenkontaktfläche (K) liegt, die gebildet wird, wenn der Innendruck des Reifens der normale Innendruck ist und die maximale Belastung auf den Reifen ausgeübt wird,
eine Außenumfangslänge (L) jedes Blocks innerhalb des Bereichs von 39,0 bis 53,0 % der Reifen-Mittellinienlänge (X) in der Bodenkontaktfläche (K) liegt,
eine tiefste Tiefe (Ds) der Lamellen innerhalb des Bereichs von 50 bis 90 % der Tiefe (D) der Hauptrillen in der Umfangsrichtung liegt,
und wenn Sa eine Fläche der Außenumfangswand des Blocks angibt und Sb eine Gesamtfläche der in jedem Block bereitgestellten Lamellen angibt, für jeden Block die folgenden Werte berechnet werden:

$$Gt = S/ (Sa + Sb \times 0{,}6)$$

$$Gu = S/ (Ds \times L + Sb \times 0{,}6)$$

und Reihenmittel von Gt berechnet werden, die der mittlere Wert des Gt-Wertes für jede Blockreihe sind, und Reihenmittel von Gu berechnet werden, die der mittlere Wert des Gu-Wertes für jede Blockreihe sind,
und eine Gesamtsumme Gt berechnet wird, welche die Gesamtsumme der Reihenmittel von Gt ist, und eine Gesamtsumme Gu berechnet wird, welche die Gesamtsumme der Reihenmittel von Gu ist, dann
das Folgende erfüllt ist:

$$0{,}95 \leq \text{Gesamtsumme } Gt \leq 1{,}05$$

$$1{,}30 \leq \text{Gesamtsumme } Gu \leq 1{,}60.$$

2. Luftreifen nach Anspruch 1, wobei das Folgende erfüllt ist:

$$1{,}30 \leq \text{Gesamtsumme } Gu \leq 1{,}45.$$

## Revendications

1. Bandage pneumatique (10) avec une partie servant de bande de roulement (16) comprenant trois rangées de blocs (32, 34L, 34R, 36L, 36R) formées de blocs (26, 46), les blocs étant séparés par quatre rainures principales (20L, 20R, 22L, 22R) dans la direction périphérique du bandage pneumatique et des rainures latérales (24) qui coupent les rainures principales adjacentes, dans lequel
les blocs comportent chacun au moins une fente (30, 50) ;
une surface (S) d'une bande de roulement de chaque bloc est comprise dans l'intervalle de 1,60 à 2,20 % de la surface de contact avec le sol (K) qui est formée lorsque la pression intérieure du bandage pneumatique est la pression intérieure normale et la charge maximale est appliquée au bandage pneumatique ;
une longueur périphérique extérieure (L) de chaque bloc est comprise dans l'intervalle de 39,0 à 53,0 % de la longueur de ligne centrale du bandage pneumatique (X) dans la surface de contact avec le sol (K) ;
une profondeur maximale (Ds) des fentes est comprise dans l'intervalle de 50 à 90 % de la profondeur (D) des rainures principales dans la direction périphérique ;
et, lorsque Sa indique une surface de la paroi périphérique extérieure du bloc et Sb indique une surface totale des fentes ménagées dans chaque bloc, les valeurs suivantes sont calculées pour chaque bloc :

$$Gt = S/(Sa + Sb \times 0,6)$$

$$Gu = S/(Ds \times L + Sb \times 0,6)$$

et il est calculé les moyennes de rangées de Gt qui consistent en la valeur moyenne de la valeur de Gt pour chaque rangée de blocs et il est calculé les moyennes de rangées de Gu qui consistent en la valeur moyenne de la valeur de Gu pour chaque rangée de blocs ;
et une somme totale de Gt, qui est la somme totale des moyennes de rangées de Gt est calculée et une somme totale de Gu, qui est la somme totale des moyennes de rangées de Gu, est calculée ; alors
les conditions suivantes sont satisfaites

$$0,95 \leq \text{Somme totale de } Gt \leq 1,05$$

$$1,30 \leq \text{Somme totale de } Gu \leq 1,60.$$

**2.** Bandage pneumatique suivant la revendication 1, dans lequel les conditions suivantes sont satisfaites :

$$1,30 \leq \text{Somme totale de } Gu \leq 1,45.$$

FIG. 1

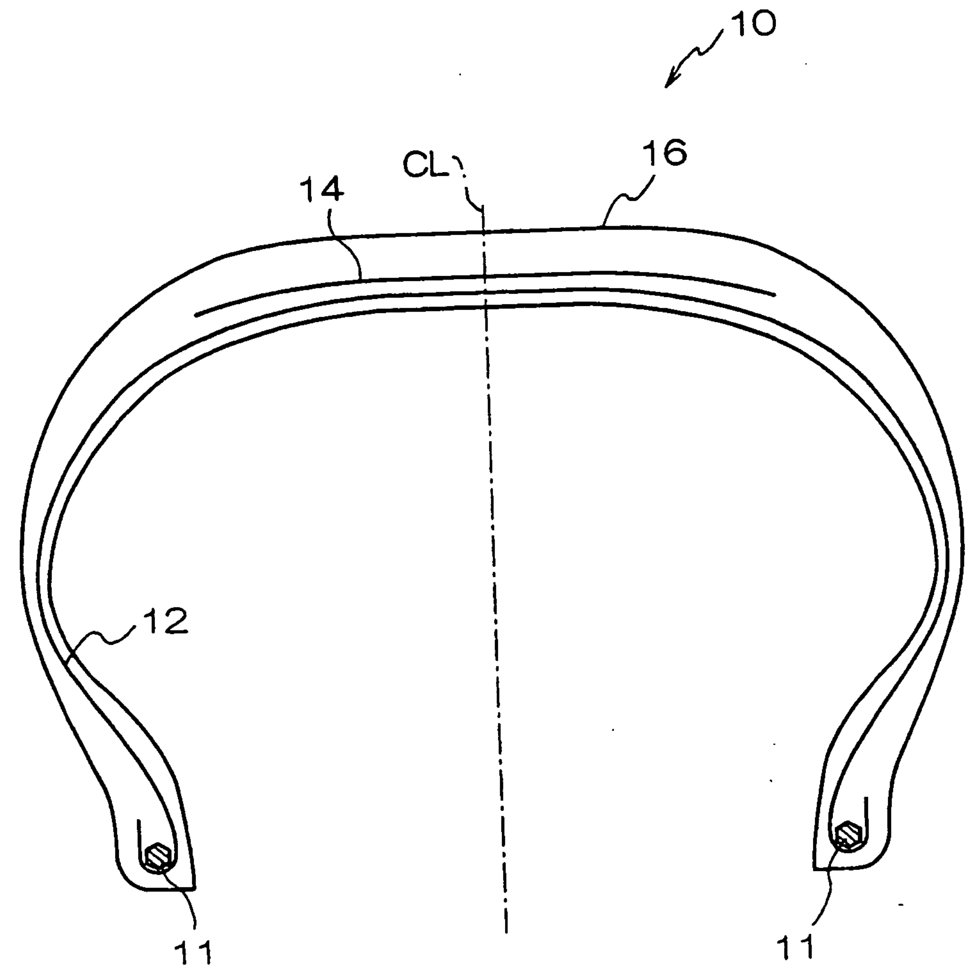

FIG. 2

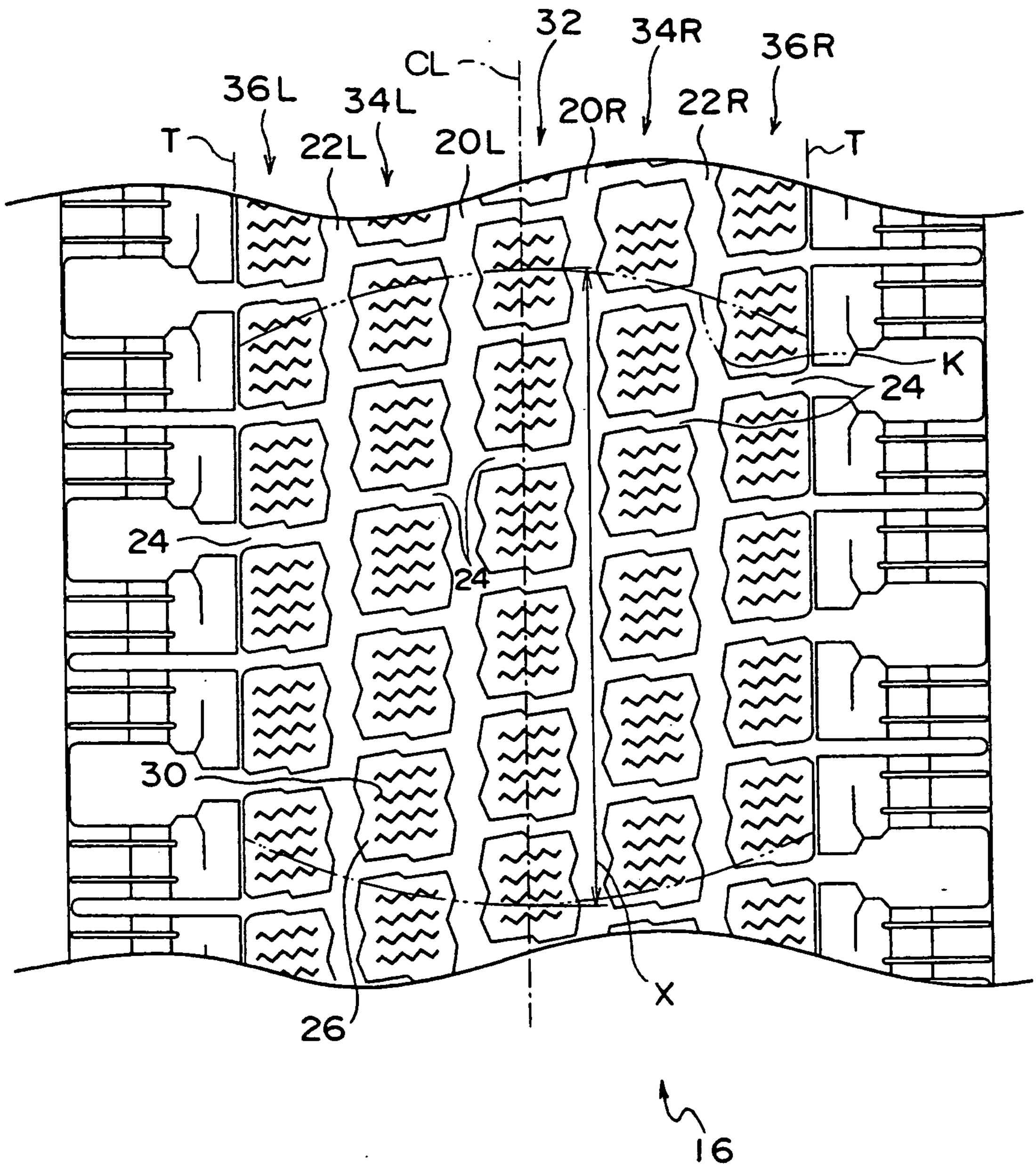

FIG. 3

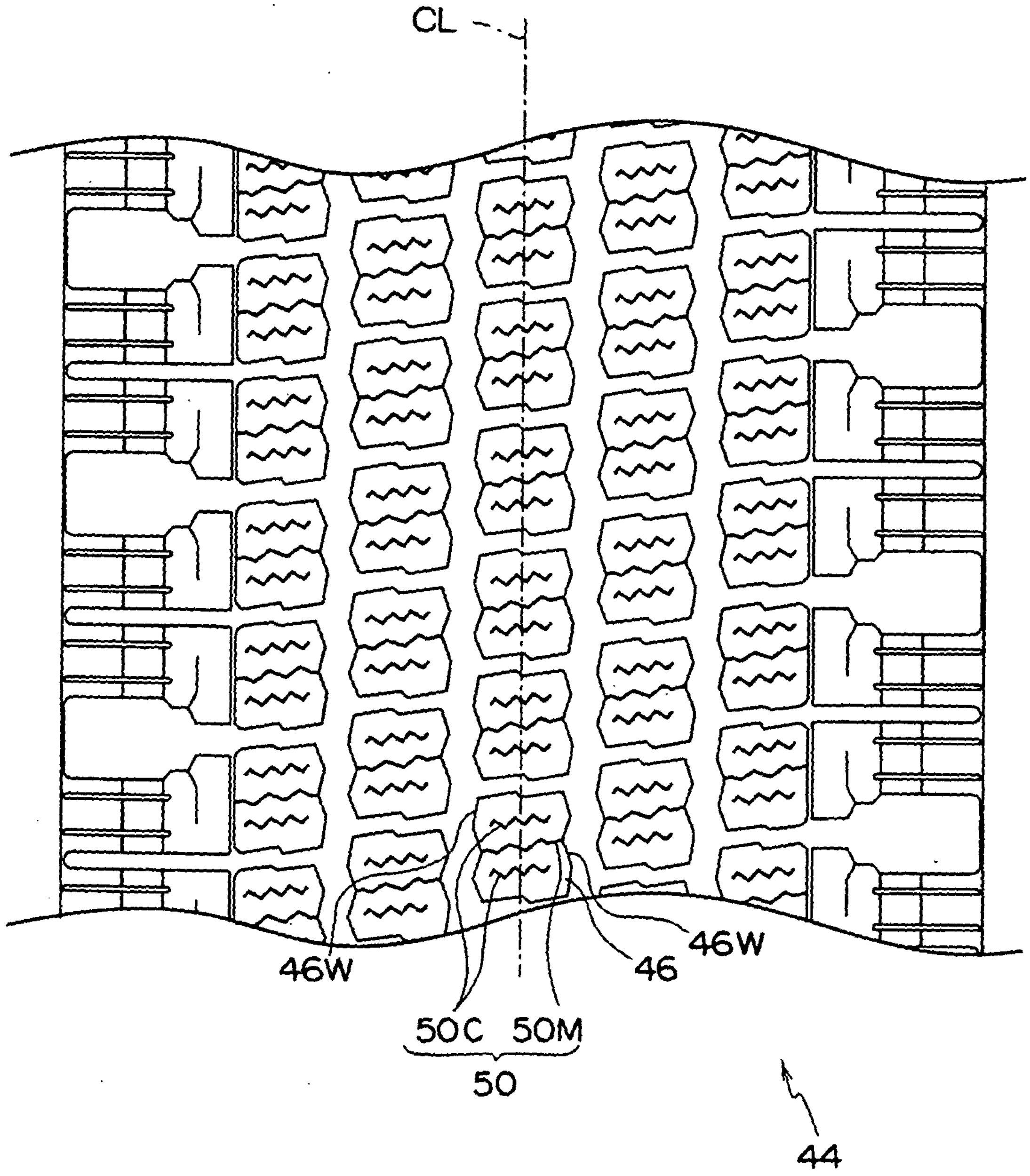

FIG. 4

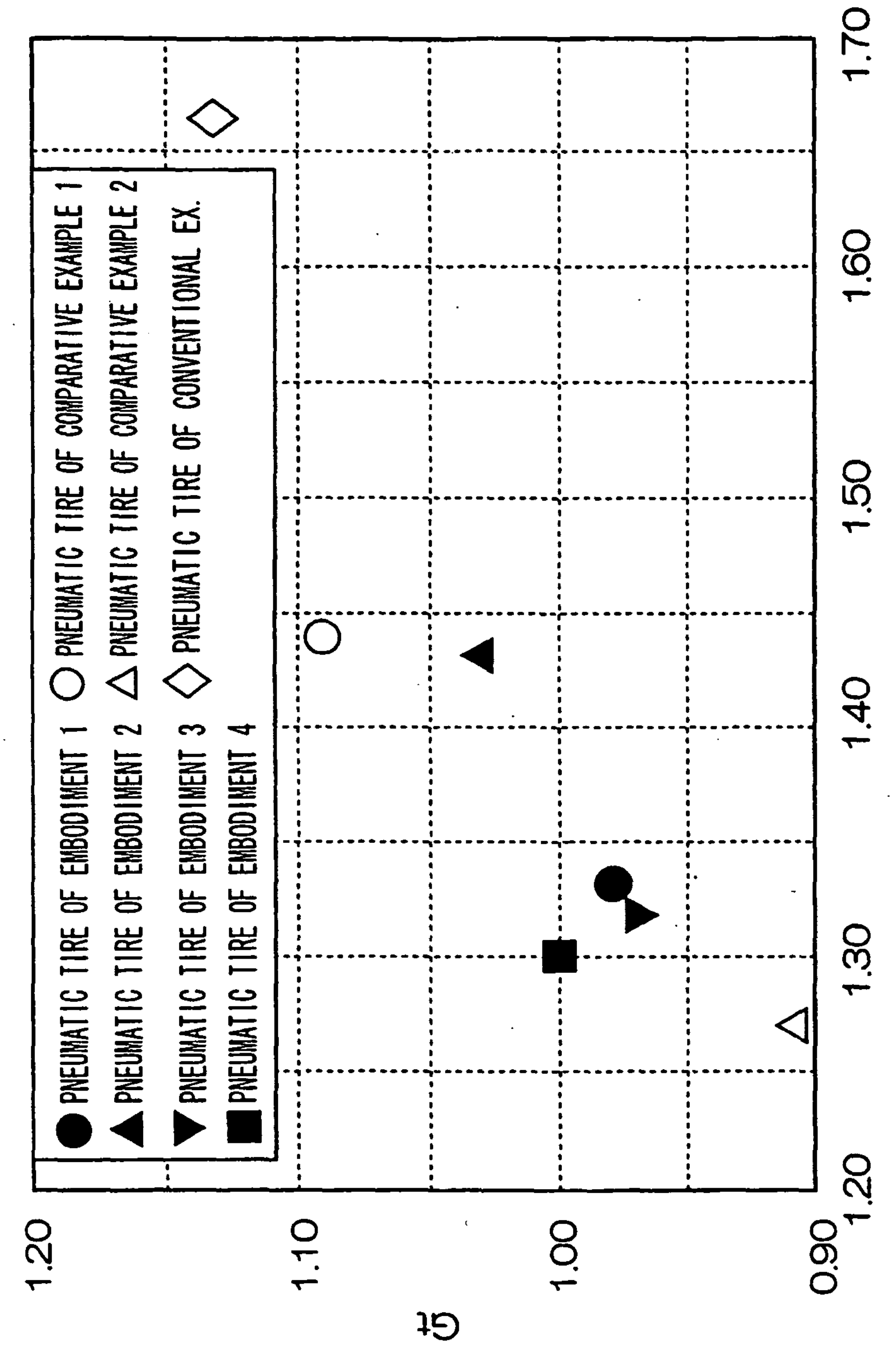
PNEUMATIC TIRE OF EMBODIMENT 1
PNEUMATIC TIRE OF EMBODIMENT 2
PNEUMATIC TIRE OF EMBODIMENT 3
PNEUMATIC TIRE OF EMBODIMENT 4
PNEUMATIC TIRE OF COMPARATIVE EXAMPLE 1
PNEUMATIC TIRE OF COMPARATIVE EXAMPLE 2
PNEUMATIC TIRE OF CONVENTIONAL EX.
Gt
1.20
1.10
1.00
0.90
Gu
1.20
1.30
1.40
1.50
1.60
1.70

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7237408 A
- JP 10024709 B
- JP 2001294023 B
- JP 0729098 A


### Non-patent literature cited in the description


- JATMA Year Book. Japan, 2004